# EUROPÄISCHE PATENTSCHRIFT

(11) **EP 4 091 792 B1**
(45) Veröffentlichungstag und Bekanntmachung des Hinweises auf die Patenterteilung: **10.07.2024**
(21) Anmeldenummer: 22171300.1
(22) Anmeldetag: 03.05.2022
(51) Int. Cl.: B29C 45/76, B29C 45/67

(54) **VERFAHREN ZUM BETREIBEN EINER KUNSTSTOFFVERARBEITUNGSMASCHINE**
METHOD FOR OPERATING A PLASTIC PROCESSING MACHINE
PROCÉDÉ PERMETTANT DE FAIRE FONCTIONNER D'UNE MACHINE DE TRAITEMENT DES MATIÈRES PLASTIQUES

(30) Priorität: 21.05.2021 DE 102021113352
(43) Veröffentlichungstag der Anmeldung: 23.11.2022
(73) Patentinhaber: Wittmann Battenfeld GmbH, 2542 Kottingbrunn (AT)
(72) Erfinder: Brunbauer, Klaus, 2540 Bad Vöslau (AT); Zöhling, Bernhard, 2751 Steinabrückl (AT)
(74) Vertreter: Gosdin, Carstensen & Partner Patentanwälte Partnerschaftgesellschaft mbB

(56) Entgegenhaltungen:
- DE-A1- 102009 058 757
- DE-A1- 102010 024 246
- DE-A1- 102018 115 301

## Beschreibung

Die Erfindung betrifft ein Verfahren zum Betreiben einer Kunststoffverarbeitungsmaschine, insbesondere einer Spritzgießmaschine, wobei die Maschine mindestens eine hydraulisch angetriebene Achse aufweist, wobei zur Betätigung der Achse in eine erste Achsrichtung durch eine von einem Motor angetriebenen Pumpe Hydraulikfluid in ein Kolben-Zylinder-System geleitet wird, so dass infolge des hydraulischen Drucks eine elastische Verformung von Teilen der Maschine erfolgt, wobei beim Abbau des hydraulischen Drucks im Kolben-Zylinder-System bei (bzw. während) der Bewegung (bzw. Betätigung) der Achse in einer der ersten Achsrichtung (Schließrichtung) entgegengesetzten zweiten Achsrichtung (Öffnungsrichtung) und der damit einher gehenden elastischen Rückverformung von Teilen der Maschine das Hydraulikfluid aus dem Kolben-Zylinder-System durch eine Turbine geleitet wird und von der Turbine ein elektrischer Generator angetrieben wird.

Um insbesondere bei Spritzgießmaschinen die erforderliche Schließkraft für das Zuhalten des Werkzeugs aufzubauen, ist ein erheblicher Energieaufwand erforderlich. Dies ist insbesondere dadurch bedingt, da zum einen eine beträchtliche Verformungsarbeit beim Dehnen der Holme, beim Stauchen des Werkzeuges und der Hebel (im Falle von Kniehebel-Schließeinheiten) sowie beim Biegen der Werkzeugaufspannplatten geleistet und zum anderen Hydrauliköl in einem oder mehreren Hydraulikzylindern durch Druckaufbau komprimiert werden muss.

Der so aufgebaute Schließdruck wird mittels eines Ventils im Hydraulikzylinder in der Regel bis zum Ende des Spritzprozesses eingeschlossen. Nach Ablauf der Kühlzeit wird der hohe Schließdruck im Hydraulikzylinder durch Öffnen eines Ventils in Richtung Tank abgelassen. Gleichzeitig entspannen sich die gedehnten Holme, das gestauchte Werkzeug und die gebogenen Platten nahezu schlagartig.

Der zyklisch und unter beträchtlichem Energieeinsatz aufgebaute Schließdruck wird ungenützt durch Öffnen eines Ventiles in den Hydraulik-Tank abgelassen. Der in der Schließeinheit gespeicherte Energieinhalt ist somit verloren.

Zudem können durch die Schlagartigkeit dieses Vorganges im Hydraulik-Tank unerwünschte Verwirbelungen entstehen, die möglicherweise schädliche Lufteinschlüsse im Hydrauliköl begünstigen.

Ein Verfahren der eingangs genannten Art ist aus der DE 10 2018 115 301 A1 bekannt. Ähnliche Lösungen zeigen die DE 10 2009 058 757 A1**,** die DE 10 2010 020 573 A1 und die DE 10 2010 024 246 A1.

Der Erfindung liegt die **Aufgabe** zugrunde, ein Verfahren der eingangs genannten Art so fortzubilden, dass es möglich ist, die genannten Nachteile zu vermeiden und folglich die in der Maschine gespeicherte Energie zu nutzen, die sich aus der elastischen Verformung von Teilen der Maschine ergibt.

Weiterhin soll sichergestellt werden, dass die Rückleitung des Hydraulikfluids in den Tank so erfolgt, dass schädliche Lufteinschlüsse vermieden werden können. Die Rückgewinnung von Energie soll dabei insbesondere in einer solchen Weise erfolgen, dass die Maschine hierdurch schonend betrieben und somit nicht geschädigt wird.

Die **Lösung** dieser Aufgabe durch die Erfindung ist dadurch gekennzeichnet, dass vor der Rückleitung von Hydraulikfluid aus dem Kolben-Zylinder-System durch die Turbine in einer Verbindungsleitung zwischen Kolben-Zylinder-System und Turbine von der Pumpe ein vorgegebener Druck erzeugt wird.

Damit kann ein schlagartiger Entlastungsvorgang vermieden werden, der für die Maschine schädlich sein kann.

Nach einer bevorzugten Ausführungsform kann vor dem genannten Druckaufbau der im Zylinder (z. B. im Schließzylinder) herrschende Druck abgefragt (d. h. mittels eines Drucksensors erfasst) werden und dann die Pumpe so betrieben werden, dass sich ein gewünschter Wert für den Druck in der Verbindungsleitung ergibt (d. h. der Druck wird in der Verbindungsleitung "vorgespannt"). Erst nach dem Erreichen besagten Drucks in der Verbindungsleitung erfolgt dann der Generatorbetrieb, d. h. die Rückgewinnung von Energie.

Dabei ist es auch gemäß einer weiteren Ausgestaltung der Erfindung möglich, in der Verbindungsleitung einen Druck aufzubauen, der geringer ist als derjenige, der im Zylinder gemessen wurde, zum Beispiel ein Wert von mindestens 75 %, vorzugsweise von mindestens 90 %. Hierdurch kann Zeit und Energie gespart werden; dennoch wird ein unerwünschter schlagartiger Start des Generatorbetriebs weitgehend verhindert.

Nach entsprechendem Druckaufbau in der Verbindungsleitung kann dann ein Ventil geöffnet werden, wodurch die Energierückgewinnung durch Generatorbetrieb startet.

Möglich ist es nach einer weiteren Ausgestaltung der Erfindung auch, ohne Drucksensor zu arbeiten. In diesem Falle wird die Pumpe mit vorgegebenen Betriebsparametern betrieben, wobei es Ziel ist, die Pumpe auf den beim Druckaufbau (insbesondere beim Schließkraftaufbau) eingestellten Pumpendruck (der elektronisch zwischengespeichert wird) zu bringen und so den Druck in der Verbindungsleitung aufzubauen und diese "hydraulisch vorzuspannen". Dieser Druckaufbau kann wiederum nur auf einen Teil des Nominaldrucks erfolgen, beispielsweise auf einen Wert von mindestens 75 %, vorzugsweise von mindestens 90 %, des Nominaldrucks beim Druckaufbau (insbesondere beim Schließkraftaufbau).

Als Turbine kommt dabei bevorzugt die Pumpe selber zum Einsatz; gleichermaßen kommt als Generator bevorzugt der Motor selber zum Einsatz.

Mit der vom Generator erzeugten elektrischen Energie kann bevorzugt ein Heizelement der Maschine mit elektrischer Energie versorgt werden.

Die vom Generator erzeugte elektrische Energie kann dabei in einen elektrischen Zwischenkreis geleitet werden, von wo aus elektrische Verbraucher der Maschine (gegebenenfalls auch elektrische Verbraucher außerhalb der Maschine) mit elektrischer Energie versorgt werden.

Der Fluss von Hydraulikfluid aus dem Kolben-Zylinder-System durch die Turbine erfolgt dabei bevorzugt gesteuert oder geregelt. Insbesondere kann vorgesehen werden, dass der Fluss von Hydraulikfluid aus dem Kolben-Zylinder-System durch die Turbine gemäß einem vorgegebenen Profil (d. h. gemäß einem vorgegebenen Volumenstrom an Hydraulikfluid über der Zeit) erfolgt.

Beschrieben wird auch eine Kunststoffverarbeitungsmaschine, insbesondere eine Spritzgießmaschine, mit mindestens einer hydraulisch angetriebenen Achse und einer von einem Motor angetriebenen Pumpe zum Fördern von Hydraulikfluid in ein Kolben-Zylinder-System für die Betätigung der Achse in eine erste Achsrichtung. Vorgesehen ist dabei eine Turbine, die mit einem elektrischen Generator verbunden ist, wobei die Turbine mit dem Kolben-Zylinder-System über eine Verbindungsleitung in Verbindung steht, um Hydraulikfluid aus dem Kolben-Zylinder-System durch die Turbine zu leiten und hierdurch mittels des Generators elektrische Energie zu generieren.

Wie bereits erwähnt, sind dabei bevorzugt die Turbine und die Pumpe identisch, gleichermaßen sind bevorzugt auch der Generator und der Motor identisch.

Die Pumpe ist bevorzugt eine Konstantpumpe (Konstantpumpen verdrängen bei jeder Umdrehung der Pumpe immer das gleiche Volumen, im Unterschied zu Verstellpumpen), der Motor ist bevorzugt ein drehzahlvariabler Antriebsmotor, der auch zum generatorischen Betrieb geeignet ist.

Das vorgeschlagene Verfahren und die entsprechende Vorrichtung eignen sich in besonderer Weise, um eine Rückgewinnung der Energie zu bewerkstelligen, die beim Aufbau der Schließkraft von hydraulischen Maschinen aufgewendet wird.

Zur Nutzung der in der Maschine, insbesondere in deren Schließeinheit (insbesondere im Falle eine Spritzgießmaschinen) gespeicherten Energie wird also gemäß der Erfindung diese in elektrische Energie umgewandelt und so dann anderen Verbrauchern zugeführt, beispielsweise der Zylinderheizung der Plastifiziereinheit der Maschine.

Um die gespeicherte Energie in elektrische Energie umzuwandeln, ist demgemäß vorgesehen, den Druckabbau geführt über eine Hydraulikpumpe (vorzugsweise als Konstantpumpe mit drehzahlvariablem Antriebsmotor ausgeführt) abzubauen.

Zum Zeitpunkt des beabsichtigten Schließkraftabbaus (insbesondere im Falle einer Spritzgießmaschinen) wird ein geeignetes Ventil geöffnet, so dass bei der elastischen Rückverformung der Maschinenteile der insoweit gespeicherte (Schließ)Druck in Richtung der Hydraulikpumpe strömen kann, die jetzt als Turbine arbeitet. Dadurch wird die jetzt als Turbine arbeitende Pumpe in umgekehrter Drehrichtung beschleunigt und treibt so den Antriebsmotor an, der nunmehr als Generator arbeitet und elektrische Energie erzeugt.

Die Hydraulikpumpe mit Antriebsmotor kann dabei auch als Hauptantrieb der Maschine, insbesondere der Spritzgießmaschine, ausgeführt sein.

In einer bevorzugten Ausführungsform der Erfindung wird die generatorisch erzeugte elektrische Energie in einen Gleichstromzwischenkreis eines drehzahlvariablen Hauptantriebs eingespeist und dann mittels Halbleiterschaltelementen beispielsweise einer Zylinderheizung oder anderen Verbrauchern zugeführt.

Damit kann in vorteilhafter Weise die Energieeffizienz einer Kunststoffverarbeitungsmaschine, insbesondere einer Spritzgießmaschine, erheblich gesteigert und ein Beitrag zur Senkung des Energieverbrauchs geleistet werden.

Wie erwähnt, wird gemäß einer bevorzugten Ausführungsform des vorgeschlagenen Verfahrens kurz vor dem Öffnen des Hydraulikventils (Ventil in der Fluidleitung zwischen Kolben-Zylinder-System und Hydraulik-tank) zum Druckabbau mittels der Hydraulikpumpe aktiv ein Druck in der Hydraulikleitung aufgebaut, um einen schlagartigen Abfall des Drucks zu unterbinden und somit den Druckabbau sanft und schonend zu gestalten.

Mit Hilfe eines drehzahlvariablen Pumpenantriebs kann der Verlauf des Druckabbaus frei gestaltet und nach gewünschten Anforderungen optimiert werden. Beispielsweise kann ein langsam gestalteter Schließkraftabbau den Spritzprozess begünstigen. Weiterhin kann hinsichtlich einer maximalen Energieausbeute oder einer schnellen Zykluszeit eine Optimierung vorgenommen werden.

Ferner kann hinsichtlich der Rückströmgeschwindigkeit in den Hydrauliktank (des rückfließenden Hydraulikfluids) eine Optimierung vorgenommen werden, um unerwünscht hohe Strömungsgeschwindigkeiten zu vermeiden und die Gefahr einer übermäßigen Verwirbelung oder eines schädlichen Lufteintrags in das Hydrauliköl zu unterbinden.

Das vorgeschlagene Verfahren kann für alle hydraulischen Achsen der Maschine eingesetzt werden, wobei insbesondere die Düsenanlage einer Spritzgießmaschinen erwähnt sein soll, bei denen ein hydraulischer Druck zunächst eingesperrt ist, somit als Energie gespeichert ist und anschließend Energie rückgewonnen werden kann.

Natürlich kann auch vorgesehen werden, dass das vorgeschlagene Verfahren nur für einzelne Maschinenachsen eingesetzt wird. Somit kann es für andere Achsen deaktiviert werden.

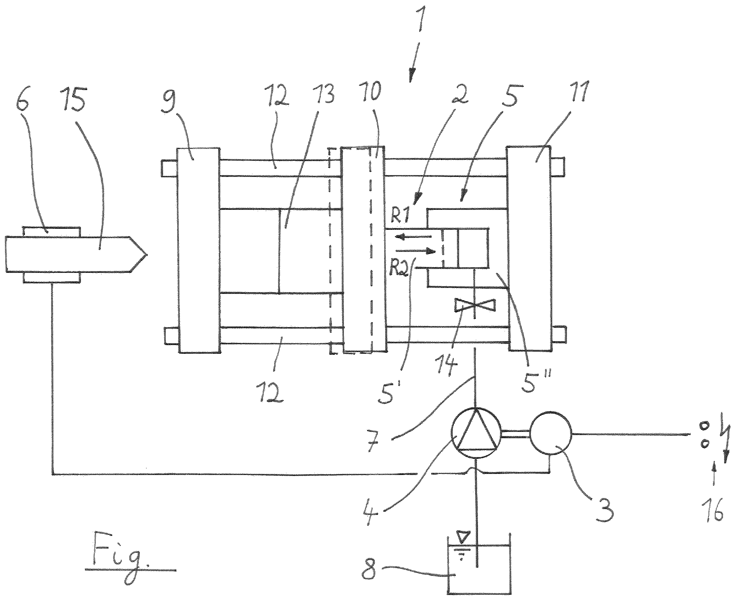

In der Zeichnung ist ein Ausführungsbeispiel der Erfindung dargestellt. Die einzige Figur zeigt schematisch eine Spritzgießmaschine, in der zum Schließen eines Spritzgießwerkzeugs hydraulischer Druck aufgebaut wird.

In der Figur ist eine Kunststoffverarbeitungsmaschine in Form einer Spritzgießmaschine schematisch skizziert. In bekannter Weise befindet sich ein zweiteiliges Spritzgießwerkzeug 13 zwischen einer festen Werkzeugaufspannplatte 9 und einer beweglichen Werkzeugaufspannplatte 10. Ein Kolben-Zylinder-System 5 mit einem Kolben 5' und einem Zylinder 5" ist zwischen der beweglichen Werkzeugaufspannplatte 10 und einer festen Platte 11 angeordnet; die Platten 9 und 11 sind über Holme 12 miteinander verbunden. Die Anordnung definiert somit eine hydraulisch angetriebene Achse 2, über die das Werkzeug 13 geschlossen werden kann, wenn das Kolben-Zylinder-System 5 in eine erste Achsrichtung R1 verfahren wird; entsprechend wird über die Achse 2 das Werkzeug 13 geöffnet, wenn das Kolben-Zylinder-System 5 in eine zweite Achsrichtung R2 verfahren wird, die der ersten Achsrichtung R1 entgegengesetzt ist.

Zum Schließen des Werkzeugs 13 wird Hydraulikfluid aus einem Hydrauliktank 8 von einer Pumpe 4 angesaugt, die von einem Motor 3 angetrieben wird. Über eine Verbindungsleitung 7 wird - bei geöffneter Stellung eines Ventils 14 - das Hydraulikfluid in den Arbeitsraum des Kolben-Zylinder-Systems 5 eingeleitet, so dass die beiden Hälften des Werkzeugs 13 aufeinander zu gefahren werden. Mit ausgezogenen Linien ist in der Figur der Zustand dargestellt, bei dem das Werkzeug 13 gerade geschlossen ist, allerdings noch keine Zuhaltekraft vom Kolben-Zylinder-System 5 aufgebaut wurde.

Zum zuverlässigen Zuhalten des Werkzeugs 13 während des Spritzgießprozesses muss das Kolben-Zylinder-System 5 eine erhebliche Schließkraft aufbringen. Hierzu muss das Kolben-Zylinder-System 5 eine weitere Verschiebung des Kolben 5' realisieren, was sich infolge der elastischen Verformungen in der Maschine ergibt. Mit gestrichelten Linien ist in der Figur (stark übertrieben) angedeutet, wie nach dem Schließen des Werkzeugs 13 hinaus eine elastische Verformung von Teilen der Maschine erfolgt. Angedeutet ist hier, wie die bewegliche Werkzeugaufspannplatte 10 bei bereits geschlossenem Werkzeug 13 weiter auf die feste Werkzeugaufspannplatte 9 zu geschoben wurde, um eine hinreichende Werkzeug-Zuhaltekraft aufzubauen. Ist dieser Zustand erreicht, wird das Ventil 14 geschlossen und somit der Schließdruck eingesperrt.

Damit die beim Öffnen des Werkzeugs 13 insoweit in der Maschine durch elastische Verformung von Teilen der Maschine gespeicherte Energie nicht verloren geht, sondern genutzt werden kann, ist vorgesehen, dass beim Abbau des hydraulischen Drucks im Kolben-Zylinder-System 5, d. h. beim Öffnen des Ventils 14 (und somit bei der Betätigung bzw. Bewegung der Achse 2 in die zweite Achsrichtung R2 und der damit einher gehenden elastischen Rückverformung von Teilen der Maschine) das Hydraulikfluid aus dem Kolben-Zylinder-System 5 durch eine Turbine 4 geleitet und von der Turbine 4 ein elektrischer Generator 3 angetrieben wird. Bei der Pumpe und der Turbine handelt es sich um dasselbe Bauteil; dies gilt gleichermaßen für den Motor und den Generator.

Während also beim Schließen des Werkzeugs 13 der Motor 3 die Pumpe 4 antreibt und Hydraulikfluid vom Hydrauliktank 8 über die Verbindungsleitung 9 in den Arbeitsraum des Kolben-Zylinder-Systems 5 fördert, arbeitet beim Schließkraftabbau im Werkzeug 13 die Pumpe 4 jetzt als Turbine, die vom rückströmenden Hydraulikfluid angetrieben wird; der Motor 3 arbeitet jetzt als Generator und erzeugt Strom.

Insofern ist in der Figur schematisch angedeutet, dass beim Schließen des Werkzeugs 13 Strom aus einem Stromnetz 16 entnommen wird, dass beim Schließkraftabbau im Werkzeug 13 indes Strom erzeugt und dieser anderweitig genutzt werden kann. In der Figur ist angedeutet, wie der generierte Strom genutzt wird, um ein Heizelement 6 einer Spritzeinheit 15 mit elektrischer Energie zu versorgen.

Über den drehzahlvariablen Antrieb bzw. Motor 3 kann dabei der Fluss des Hydraulikfluids gesteuert bzw. geregelt werden. Dies gilt insbesondere mit Blick darauf, dass für den Entspannungsvorgang beim Öffnen des Werkzeugs 13 ein vorgegebener Profilverlauf für den Volumenstrom über der Zeit gesteuert oder geregelt vorgegeben werden kann, um eine schlagartige Druckentlastung im System zu vermeiden und so die Maschine zu schonen.

Vor dem Öffnen des Ventils 14 beim Öffnen des Werkzeugs 13 kann auch (wozu der Motor 3 arbeiten und die Pumpe 4 antreiben muss) ein erhöhter Druck in der Verbindungsleitung 7 aufgebaut werden, um den DruckabbauVorgang im Kolben-Zylinder-System 5 sanft einzuleiten.

### Bezugszeichenliste:

- 1: Kunststoffverarbeitungsmaschine (Spritzgießmaschine)
- 2: hydraulisch angetriebene Achse
- 3: Motor / Generator
- 4: Pumpe / Turbine
- 5: Kolben-Zylinder-System
- 5': Kolben
- 5": Zylinder
- 6: Heizelement
- 7: Verbindungsleitung
- 8: Hydrauliktank
- 9: feste Werkzeugaufspannplatte
- 10: bewegliche Werkzeugaufspannplatte
- 11: feste Platte
- 12: Holm
- 13: Spritzgießwerkzeug
- 14: Ventil
- 15: Spritzeinheit
- 16: Stromnetz

- R1: erste Achsrichtung
- R2: zweite Achsrichtung

## Patentansprüche

1. Verfahren zum Betreiben einer Kunststoffverarbeitungsmaschine (1), insbesondere einer Spritzgießmaschine, wobei die Maschine (1) mindestens eine hydraulisch angetriebene Achse (2) aufweist, wobei zur Betätigung der Achse (2) in eine erste Achsrichtung (R1) durch eine von einem Motor (3) angetriebenen Pumpe (4) Hydraulikfluid in ein Kolben-Zylinder-System (5) geleitet wird, so dass infolge des hydraulischen Drucks eine elastische Verformung von Teilen der Maschine (1) erfolgt, wobei beim Abbau des hydraulischen Drucks im Kolben-Zylinder-System (5) bei der Bewegung der Achse (2) in einer der ersten Achsrichtung (R1) entgegengesetzten zweiten Achsrichtung (R2) und der damit einher gehenden elastischen Rückverformung von Teilen der Maschine (1) das Hydraulikfluid aus dem Kolben-Zylinder-System (5) durch eine Turbine (4) geleitet wird und von der Turbine (4) ein elektrischer Generator (3) angetrieben wird,
**dadurch gekennzeichnet,**
**dass** vor der Rückleitung von Hydraulikfluid aus dem Kolben-Zylinder-System (5) durch die Turbine (4) in einer Verbindungsleitung (7) zwischen Kolben-Zylinder-System (5) und Turbine (4) von der Pumpe (4) ein vorgegebener Druck erzeugt wird.

2. Verfahren nach Anspruch 1, **dadurch gekennzeichnet, dass** als Turbine die Pumpe (4) und als Generator der Motor (3) verwendet wird.

3. Verfahren nach Anspruch 1 oder 2, **dadurch gekennzeichnet, dass** mit der vom Generator erzeugten elektrischen Energie ein Heizelement (6) der Maschine (1) versorgt wird.

4. Verfahren nach einem der Ansprüche 1 bis 3, **dadurch gekennzeichnet, dass** die vom Generator erzeugte elektrische Energie in einen elektrischen Zwischenkreis geleitet wird, von wo aus elektrische Verbraucher mit elektrischer Energie versorgt werden.

5. Verfahren nach einem der Ansprüche 1 bis 4, **dadurch gekennzeichnet, dass** der Fluss von Hydraulikfluid aus dem Kolben-Zylinder-System (5) durch die Turbine (4) gesteuert oder geregelt erfolgt.

6. Verfahren nach Anspruch 5, **dadurch gekennzeichnet, dass** der Fluss von Hydraulikfluid aus dem Kolben-Zylinder-System (5) durch die Turbine (4) gemäß einem vorgegebenen Profil (Volumenstrom über der Zeit) erfolgt.

## Claims

1. Method for operating a plastics processing machine (1), in particular an injection moulding machine, wherein the machine (1) has at least one hydraulically driven axle (2), wherein hydraulic fluid is fed into a piston-cylinder system (5) by a pump (4) driven by a motor (3) in order to actuate the axle (2) in a first axial direction (R1), so that elastic deformation of parts of the machine (1) takes place as a result of the hydraulic pressure, wherein the hydraulic fluid is passed from the piston-cylinder system (5) through a turbine (4) and an electric generator (3) is driven by the turbine (4), when the hydraulic pressure in the piston-cylinder system (5) is reduced during the movement of the axle (2) in a second axial direction (R2) opposite to the first axial direction (R1) and the resulting elastic re-deformation of parts of the machine (1), **characterized in**
**that** prior to the return of hydraulic fluid from the piston-cylinder system (5) through the turbine (4), a predetermined pressure is generated by the pump (4) in a connecting line (7) between the piston-cylinder system (5) and the turbine (4).

2. Method according to claim 1, **characterised in that** the pump (4) is used as the turbine and the motor (3) is used as the generator.

3. Method according to claim 1 or 2, **characterised in that** a heating element (6) of the machine (1) is supplied with the electrical energy produced by the generator.

4. Method according to one of claims 1 to 3, **characterised in that** the electrical energy produced by the generator is fed into an electrical intermediate circuit, from where electrical loads are supplied with electrical energy.

5. Method according to one of claims 1 to 4, **characterised in that** the flow of hydraulic fluid from the piston-cylinder system (5) through the turbine (4) is controlled or regulated.

6. Method according to claim 5, **characterised in that** the flow of hydraulic fluid from the piston-cylinder system (5) through the turbine (4) takes place according to a predetermined profile (volume flow over time).

## Revendications

1. Procédé de fonctionnement d'une machine de transformation de matières synthétiques (1), en particulier d'une machine de moulage par injection, la machine (1) comportant au moins un axe (2) entraîné hydrauliquement, pour actionner l'axe (2) dans un premier sens axial (R1) un fluide hydraulique étant introduit dans un système piston-cylindre (5) par une pompe (4) entraînée par un moteur (3) de sorte qu'une déformation élastique de parties de la machine (1) soit effectuée à la suite de la pression hydraulique, lors de la réduction de la pression hydraulique dans le système piston-cylindre (5) pendant le mouvement de l'axe (2) dans un deuxième sens axial (R2) opposé au premier sens axial (R1) et lors de la déformation élastique inverse associée de parties de la machine (1) le fluide hydraulique provenant du système piston-cylindre (5) passant par une turbine (4) et un générateur électrique (3) étant entraîné par la turbine (4),
**caractérisé en ce que**
avant le retour du fluide hydraulique du système piston-cylindre (5) à travers la turbine (4), une pression spécifiée est générée par la pompe (4) dans une conduite de liaison (7) entre le système piston-cylindre (5) et la turbine (4).

2. Procédé selon la revendication 1, **caractérisé en ce que** la pompe (4) est utilisée comme turbine et le moteur (3) est utilisé comme générateur.

3. Procédé selon la revendication 1 ou 2, **caractérisé en ce qu'**un élément chauffant (6) de la machine (1) est alimenté avec l'énergie électrique générée par le générateur.

4. Procédé selon l'une des revendications 1 à 3, **caractérisé en ce que** l'énergie électrique générée par le générateur est amenée dans un circuit électrique intermédiaire à partir duquel les consommateurs électriques sont alimentés en énergie électrique.

5. Procédé selon l'une des revendications 1 à 4, **caractérisé en ce que** le débit de fluide hydraulique provenant du système piston-cylindre (5) par le biais de la turbine (4) est commandé ou régulé.

6. Procédé selon la revendication 5, **caractérisé en ce que** le débit du fluide hydraulique provenant du système piston-cylindre (5) par le biais de la turbine (4) suit un profil spécifié (débit volumique par rapport au temps).
